# EUROPÄISCHE PATENTANMELDUNG

(11) **EP 4 675 135 A1**
(43) Veröffentlichungstag der Anmeldung: **07.01.2026**
(21) Anmeldenummer: 25176632.5
(22) Anmeldetag: 15.05.2025
(51) Int. Cl.: F16K 7/12, F16K 41/12, F16K 25/00

(54) **FEDERELEMENT FÜR NACHSTELLUNG**

(30) Priorität: 01.07.2024 DE 102024118523
(71) Anmelder: SISTO Armaturen S.A., 6468 Echternach (LU)
(72) Erfinder: HACKENBERGER, Bernd, 6468 Echternach (LU); BRÜCK, Pascal, 6468 Echternach (LU); SICHWARDT, Paul, 6468 Echternach (LU); HESS, Timo, 6468 Echternach (LU)
(74) Vertreter: Busch, Tobias

(57) **Zusammenfassung**

Membranventil mit einer Membran (5), die Räume voneinander dichtend trennt, wobei die Membran (5) zwischen Gehäuseteilen (1, 7) angeordnet ist. Das Membranventil weist ein Stützelement (19) auf, das zum dichtenden Anpressen der Membran (5) mit mindestens einem Federelement (20) zusammenwirkt.

## Beschreibung

Die Erfindung betrifft ein Membranventil mit einer Membran, die Räume voneinander dichtend trennt, wobei die Membran zwischen Gehäuseteilen angeordnet ist.

Membranventile finden Anwendung in der präzisen Dosierung verschiedener Fluide, darunter Gase, Dämpfe und Flüssigkeiten. Insbesondere eignen sie sich zur Dosierung und Verteilung von hochviskosen oder stark haftfähigen Medien, wobei sie effektiv Ablagerungen verhindern und somit eine Kontamination ausschließen. Aufgrund ihres geringen Totraumvolumens und einer entleerungsoptimierten Konstruktion sind Membranventile prädestinierte Armaturen im Bereich der sterilen Prozesstechnik.

In pharmazeutischen Anlagen und Fertigungsprozessen sind diese Eigenschaften von entscheidender Bedeutung, da strenge Validierungsanforderungen erfüllt werden müssen, um eine gleichbleibende und reproduzierbare Qualität sicherzustellen. Die Möglichkeit, verschiedene Prozesse neben der Produktion wie Reinigung, Desinfektion und Sterilisation innerhalb der Anlage durchzuführen, ist ein zentraler Aspekt. Aufgrund ihrer vorteilhaften Konstruktionsmerkmale haben sich Membranventile als bevorzugte Armatur in der sterilen Prozesstechnik etabliert.

Die eingesetzten Membranen fungieren als bewegliche, dichtende Barrieren, die zwei Räume mit unterschiedlichen Medien und Druckverhältnissen voneinander trennen. Ein entscheidendes Qualitätsmerkmal für Membranen ist ihre Beweglichkeit, also die Fähigkeit, senkrecht zur Einspannfläche einen Hub auszuführen, der mechanisch angetrieben sein kann. Zudem spielt die Beständigkeit der Membran eine wichtige Rolle, insbesondere, wenn aggressive Medien transportiert werden.

Die Bewegungsfähigkeit und Beständigkeit der Membran hängen im Wesentlichen vom Werkstoff ab. Als Grundwerkstoffe für Membranen werden vorwiegend Elastomere verwendet, die durch Gewebeeinlagen für eine höhere Festigkeit verstärkt werden können. Ein bewährtes Elastomer für Membranen ist Ethylen-Propylen-Dien-Kautschuk (EPDM), ein terpolymersynthetischer Kautschuk, der sich durch hohe Elastizität und gute chemische Beständigkeit auszeichnet.

In der DE 195 05 747 A1 wird ein Membranventil beschrieben, welches aus einem Gehäuse besteht, das ein Gehäuseoberteil und ein Gehäuseunterteil aufweist. Zwischen den beiden Gehäuseteilen ist eine Membran eingespannt, die einen Randwulst besitzt. Mithilfe einer außerhalb des Randwulstes gelegenen Verschraubung ist die Membran in einer Kammer eingespannt, die durch das Gehäuseoberteil und das Gehäuseunterteil gebildet wird. An den Randwulst ist ein außenliegender lappenartiger Fortsatz angeformt. Der lappenartige Fortsatz ist zwischen den entsprechenden Stirnflächen des Gehäuseoberteils und des Gehäuseunterteils angeordnet.

Der Bereich, in dem eine Ventilmembran eingespannt wird, unterliegt speziellen Anforderungen. Primär dient er dazu, die Membran zu halten, wobei der Randbereich während des Schließens und in geschlossener Position einem radial nach innen gerichteten Zug ausgesetzt ist. Sofern keine zusätzliche Abdichtung zwischen dem Unterteil und dem Oberteil des Gehäuses vorgesehen ist, kann der eingespannte Rand zwischen den Gehäuseteilen auch die Funktion einer ruhenden Abdichtung übernehmen.

Die kontinuierliche Belastung des Einspannbereichs der Membran führt insbesondere bei einem flachen Membranrand oft zu strukturellen Veränderungen. Diese können letztendlich zu Undichtigkeiten im betroffenen Bereich des Gehäuses führen.

Bei Membranen mit einem eingespannten Randwulst zwischen den Gehäuseteilen tritt die zuvor beschriebene Problematik entweder überhaupt nicht oder nur in geringerem Maße auf. Die auf den Randwulst wirkende Flächenpressung muss nicht so hoch sein wie bei einem flachen Rand, da der großräumige Wulst sich der ihn aufnehmenden Kammer anpasst. Dadurch wird eine effektive Abdichtung gewährleistet. Die Kammerung des Einspannbereichs sorgt zudem für eine dauerhafte Halterung.

Die an sich vorteilhafte Kammerung des Randwulstes bringt jedoch ein Problem mit sich, das auf eine mögliche unsachgemäße Montage oder Wartung zurückzuführen ist. Wenn das vom Hersteller vorgeschriebene Anzugsdrehmoment der Verschraubung eines solchen Membranventils erheblich überschritten wird, kann dies zu einer radialen Verdrängung eines Teils des Membranmaterials im Randwulst führen. An der rundum verlaufenden Engstelle, die durch die beiden Gehäuseteile gebildet wird und die die Kammer begrenzt, kann es zu einer Materialanhäufung kommen. Insbesondere während der Membranbetätigung können diese Anhäufungen zu Spannungen im betroffenen und angrenzenden Membranbereich führen. Diese Spannungen können bei Membranen ohne Faserverstärkung letztendlich zu einem Einreißen der Membranoberfläche und sogar zu einem Membranbruch führen.

Die EP 3 324 084 B1 offenbart ein Membranventil mit einer Membran, die Räume voneinander dichtend trennt, wobei die Membran zwischen Gehäuseteilen angeordnet ist, wobei die Membran einen inneren Bereich aufweist, an den sich ein äußerer Bereich anschließt, der eine höhere Härte aufweist, wobei der innere Bereich aus einem elastomeren Werkstoff besteht, wobei der äußere Bereich aus einem thermoplastischen und/oder duroplastischen Werkstoff besteht, wobei die Membran ein Federelement aufweist.

Um ein über das vorgeschriebene Maß hinausgehendes Anziehen der Verschraubung zu verhindern, könnte der Randwulst, die ihn aufnehmende Kammer und die Stirnflächen von Gehäuseunter- und -oberteil so konstruiert und dimensioniert werden, dass die maximal zulässige Pressung des Randwulstes erreicht wäre, wenn die Stirnflächen der Gehäuseteile vollständig aneinander liegen würden. Allerdings würde dies aufgrund der erforderlichen Präzision einen erheblichen Aufwand in der Herstellung der Membranen und Gehäuseteile erfordern, möglicherweise inklusive zusätzlichem Anpassungsaufwand.

Insbesondere bei zweiteiligen Membranen kann es über die Einsatzzeit der Membran zu einer sogenannten Relaxation kommen. Dabei beginnt die Membran langsam zu fließen, wodurch die Abdichtung zwischen Gehäuse und Membran schwindet. Das rechtzeitige Nachspannen der Verschraubung, die auf den Membranrand wirkt, kann den Zeitpunkt für das Auftreten einer Undichtigkeit verzögern. Dies bedarf einer zusätzlichen organisatorischen Maßnahme, bei der das Nachspannen wiederum nicht über das erforderliche Maß hinaus erfolgen darf.

Aufgabe der Erfindung ist es, ein Membranventil bereitzustellen, bei dem eine Fehlmontage der Membran durch zu starkes Anziehen und damit eine zu starke Verpressung verhindert wird. Dabei sollte das Membranventil eine dauerhafte Abdichtung zwischen den Gehäuseteilen und der Membran gewährleisten können. Das Membranventil soll sich durch eine preiswerte Herstellungsweise und eine hohe Lebensdauer auszeichnen. Zudem soll das Membranventil möglichst wartungsfrei sein und eine hohe Dichtigkeit gewährleisten. Weiterhin soll sich das Membranventil durch ein möglichst geringes Totvolumen und eine gute Reinigungsfähigkeit auszeichnen, sodass insbesondere die Anforderungen für einen hochsterilen Einsatz erfüllt werden.

Diese Aufgabe wird erfindungsgemäß durch ein Membranventil gemäß den Merkmalen des Anspruchs 1 gelöst. Bevorzugte Varianten sind den Unteransprüchen, der Beschreibung und den Figuren zu entnehmen.

Gemäß der Erfindung weist das Membranventil ein Stützelement auf, das zum dichtenden Anpressen der Membran mit mindestens einem Federelement zusammenwirkt.

Ein Stützelement realisiert beispielsweise die Krafteinleitung ausgehend von einem Gehäuseoberteil, insbesondere der Haube eines Membranventils, in die Membran, insbesondere ausgehend von der Haubenverschraubung im Gehäuse des Membranventils.

Bei einer Variante der Erfindung ist das Stützelement ringförmig, insbesondere in Form eines Metallrings, ausgeführt.

Bei einer weiteren Variante der Erfindung ist das Profil des Stützelements L-förmig ausgebildet.

Beispielsweise wirkt das Stützelement unmittelbar mit mindestens einem Federelement zum dichtenden Anpressen der Membran zusammen.

Ein Federelement ist ein Bauteil, das dazu dient, eine Kraft bzw. einen Anpressdruck auf eine definierte Fläche aufzubringen. Es besteht typischerweise aus einer Feder, die einer definierten Vorspannung unterliegt, um die genannte Funktion zu erfüllen.

Das Federelement wirkt beispielsweise mit dem Stützelement derart zusammen, dass das Federelement auf eine Fläche des Stützelements pressend einwirkt.

Bei einer L-förmigen Ausführung des Stützelements wirkt das Federelement zum Beispiel auf die durch die L-Form gebildete Schulter bzw. den durch die L-Form gebildeten Vorsprung des Stützelements pressend ein.

Bei einer Variante ist das Federelement in einem Raum angeordnet, der zumindest teilweise von dem Stützelement begrenzt ist.

Beispielsweise ist das Federelement von zwei Seiten durch das Stützelement begrenzt, an einer weiteren Seite bildet das Gehäuse des Membranventils und an einer vierten Seite die Haube des Membranventils eine Begrenzung.

Bei einer weiteren Variante der Erfindung ist das Federelement von zwei Seiten durch das Stützelement begrenzt, an einer weiteren Seite bildet ein Teil der Membran bzw. eine Komponente der Membran und an einer vierten Seite die Haube des Membranventils eine Begrenzung.

Bei einer Ausführung der Erfindung wirkt das Federelement unmittelbar mit einem Gehäuseteil, insbesondere mit der Haube des Membranventils, zur Pressung des Federelements zusammen.

Bei einer Variante der Erfindung ist das Federelement nicht in der Membran integriert.

Beispielsweise weist das Stützelement eine Fläche zum dichtenden Anpressen der Membran auf, wobei die Fläche des Stützelements geriffelt ausgebildet ist.

Beispielsweise weist die Fläche des Stützelements zum dichtenden Anpressen der Membran eine Kammprofilierung auf.

Bei einer Variante der Erfindung wird das Stützelement derart auf der Membran und zwischen dem Gehäuseoberteil und dem Gehäuseunterteil positioniert als auch fixiert, dass die Membran ausreichend dichtend an das Gehäuseunterteil gepresst wird. Die Abmaße des Stützelements und die Positionierung zwischen den Gehäuseteilen verhinderen eine zu hohe Pressung und die daraus resultierende Verformung der Membran.

Die Höhe des Stützrings ist beispielsweise derart ausgebildet, dass ein Raum für mindestens ein Federelement bereitgestellt wird, wobei das Federelement dabei unter Vorspannung integriert werden kann.

Bei einer Variante der Erfindung ist mindestens ein Federelement als Tellerfeder ausgebildet.

Eine Tellerfeder ist eine spezielle Art von Feder, die sich durch ihre flache, ringförmige Form auszeichnet, ähnlich einem flachen Teller oder einer Scheibe. Die Tellerfeder wird auch als Tellerscheibenfeder oder Rondellenfeder bezeichnet.

Die Funktion der Tellerfeder besteht darin, Lasten oder Kräfte in axialer Richtung aufzunehmen und zu verteilen. Die Feder kann komprimiert werden, wenn Druck ausgeübt wird, und sie kehrt in ihre ursprüngliche Form zurück, wenn die Last entfernt wird.

Es gibt auch Varianten, bei denen mehrere Federelemente zum Einsatz kommen. Vorzugsweise handelt es sich bei den federnden Elementen um ringförmig ausgebildete Elemente, die entlang des äußeren Dichtbereichs der Membran wirken. Die federnden Elemente bewirken ein Nachspannen zum dichtenden Anpressen der Membran.

Bei einer alternativen Variante kann das Federelement als ein Druckverteil-Federelement ausgebildet sein.

Beispielsweise ist mindestens ein Federelement kompakt und direkt an der Membran positioniert.

Das erfindungsgemäße Zusammenwirken des Stützrings mit mindestens einem Federelement bewirkt eine automatische Nachstellung der Abdichtung zwischen einem Gehäuseteil und der Membran und gewährleistet somit eine dauerhafte Abdichtung an dieser wichtigen Stelle im Membranventil.

Beispielsweise weist ein Gehäuseteil, insbesondere das Gehäuseunterteil des Membranventils, eine Auflagefläche zur Einwirkung auf die Membran auf.

Die Auflagefläche, die beispielsweise als Schulter bzw. Absatz ausgebildet sein kann, bietet einen Sitz für die Membran, insbesondere den Teil der Membran, auf den der Stützring bzw. das Stützelement in Kombination mit dem Federelement einwirkt. Insofern bilden der Teilbereich der Membran in Kontakt zur Auflagefläche und die Auflagefläche des Gehäuseunterteils korrespondierende Dichtflächen.

Beispielsweise ist die Membran mehrteilig mit einer Komponente mit einer plastischen Dehnung von mehr als 10 % und mit einer Komponente mit einer plastischen Dehnung von weniger als 1 % ausgebildet. Dabei wird die plastische Dehnung angelehnt an die DIN ISO 815 gemessen, wobei ein Probekörper der jeweiligen Komponente bei einer Verpressung um 25 %, Raumtemperatur und 1 Minute Pressdauer untersucht wird.

Bei einer Variante der Erfindung ist die Membran mehrteilig ausgebildet und weist eine "elastischere" Komponente mit einem E-Modul von weniger als 100 MPa und eine "unelastischere" Komponente mit einem E-Modul von mehr als 100 MPa auf.

Beispielsweise ist die Membran zweiteilig ausgebildet. Bei einer Variante kann zwischen der Komponente der Membran mit einem E-Modul von weniger als 100 MPa und der Komponente der Membran mit einem E-Modul von mehr als 100 MPa ein Hohlraum angeordnet sein.

Der E-Modul kann beispielsweise mit der DIN-EN ISO 527 bestimmt werden.

Die "elastischere" Komponente mit einem E-Modul von weniger als 100 MPa kann beispielsweise sehr leicht verformt werden und weist einen geringen Verformungswiderstand auf. Dabei ist die Verformung nahezu reversibel.

Die "unelastischere" Komponente mit einem E-Modul von mehr als 100 MPa kann nur schwer verformt werden und weist einen hohen Widerstand gegen Verformung auf. Dementsprechend weist die unelastischere Komponente ein eher steifes Verformungsverhalten auf.

Bei einer Ausführung der Erfindung weist die Membran eine Komponente mit einer plastischen Dehnung von weniger als 1 % und mit einem E-Modul von weniger als 100 MPa aus einem Elastomer auf.

Die Komponente mit einer plastischen Dehnung von weniger als 1 % besteht beispielsweise aus einem elastomeren Werkstoff. Vorzugsweise aus Ethylen-Propylen-Dien-Kautschuk (EPDM). Bei einer Variante der Erfindung kann diese Komponente eine Gewebeeinlage umfassen. Beispielsweise kann die Komponente aus zwei Elastomerlagen bestehen, zwischen denen eine Gewebeeinlage angeordnet ist. Die Gewebeeinlage verstärkt die Komponente der Membran mit einer plastischen Dehnung von weniger als 1 %.

Beispielsweise weist die Membran eine Komponente mit einer plastischen Dehnung von mehr als 10 % auf, die aus einem Thermoplast, vorzugsweise einem PTFE, ausgebildet ist.

Die Komponente mit einer plastischen Dehnung von mehr als 10 % besteht zum Beispiel aus einem thermoplastischen und/oder duroplastischen Werkstoff. Bei Thermoplasten, die manchmal auch als Plastomere bezeichnet werden, handelt es sich um Kunststoffe, die sich in einem bestimmten Temperaturbereich verformen lassen.

Als Thermoplast kann beispielsweise PTFE eingesetzt werden. PTFE steht für Polytetrafluorethylen, ein hochmolekulares Polymer, das zu den Fluorkunststoffen gehört. PTFE ist besonders hitzebeständig und weist eine hohe Beständigkeit gegenüber Chemikalien auf.

Bei einer Ausführung der Erfindung besteht die unelastischere Komponente der Membran aus einem Duroplast. Duroplaste sind Kunststoffe, die nach ihrer Aushärtung nicht mehr verformt werden können. Es handelt sich dabei meist um relativ harte, glasartige Polymerwerkstoffe, die über chemische Hauptvalenzverbindungen dreidimensional fest vernetzt sind. Üblicherweise können Duroplaste ebenso wie Elastomere aufgrund ihrer Vernetzung nicht aufsgeschmolzen werden und zerfallen nach Überschreiten der Zersetzungstemperatur (Pyrolyse). Als Duroplaste können beispielsweise Aminoplaste oder Phenoplaste eingesetzt werden. Auch der Einsatz von Epoxidharzen bzw. vernetzten Polyacrylaten zur Fertigung der Komponente der Membran mit einem E-Modul von mehr als 100 MPa ist denkbar.

Beispielsweise ist die Komponente mit einer plastischen Dehnung von mehr als 10 % deutlich dünner als die Komponente der Membran mit einer plastischen Dehnung von weniger als 1 % ausgebildet.

Gleichzeitig umfasst die Erfindung auch alle Membranen, die einstückig ausgeführt sind.

Bei einer Variante der Erfindung weist die Membran keine Dichtlippe auf. Die Dichtlippe ist Standard nach dem Stand der Technik. Aufgrund der besonderen Konstruktion mit Stützelement und Federelement kommt das erfindungsgemäße Membranventil vollständig ohne Dichtlippe aus. Dadurch ist die Membran einfacher zu fertigen, weist einen geringeren Raumbedarf innerhalb des Membranventils auf und bedarf bei der Montage keiner besonderen Aufmerksamkeit bei der Positionierung sowie beim Einbau.

Die Membran kann gekammert oder flach ausgebildet sein. Insbesondere bei einer gekammerten Variante erweist es sich als günstig, wenn die Membran einen Randwulst aufweist.

Bei einer Ausführung der Erfindung weist die Membran ergänzend oder alternativ eine Durchgangs-Dichtlippe auf, die mit dem Sitz des Membranventils zusammenwirkt. Als besonders günstig erweist es sich, wenn der innere Bereich der Membran eine kreisförmige Ausgestaltung aufweist. Die Durchgangs-Dichtlippe kann dabei als Gerade ausgebildet sein, die durch den Mittelpunkt des Kreises verläuft. Vorzugsweise ist ein innerer bzw. mittlerer Bereich der Membran gewölbt ausgebildet.

Ein äußerer Bereich schließt sich unmittelbar an den kreisförmigen mittleren Bereich an, wobei die Außenkonturen des äußeren Bereichs der Membran vorzugsweise als gerade Kanten ausgebildet sind, sodass sie in besonders günstiger Weise zwischen den beiden Gehäuseteilen zum Einspannen wirken. Dabei erweist es sich als vorteilhaft, wenn der äußere Bereich der Membran Ausnehmungen für die Schrauben aufweist, mit denen die Membran zwischen den beiden Gehäuseteilen verspannt wird.

Vorteilhafterweise wird eine Anordnung aus Stützelement, Federelement und Membran geschaffen, die eine hohe Dichtigkeit und eine lange Lebensdauer aufweist. Bei diesem erfindungsgemäßen Membranventil werden Fehlmontagen wirksam verhindert und gleichzeitig wird eine hohe Zuverlässigkeit gewährleistet. Die Kräfte des Federelements wirken senkrecht zu den Stirnflächen der Gehäuseteile, zwischen denen die Membran eingespannt ist.

Weitere Merkmale und Vorteile der Erfindung ergeben sich aus der Beschreibung von Ausführungsbeispielen anhand von Zeichnungen und aus den Zeichnungen selbst.

Dabei zeigt:
- Fig. 1: eine Schnittdarstellung eines Membranventils,
- Fig. 2: eine Detaildarstellung der Membran, des Federelements und des Stützelements,
- Fig. 3: eine weitere Detaildarstellung einer alternativen Ausführungsvariante.

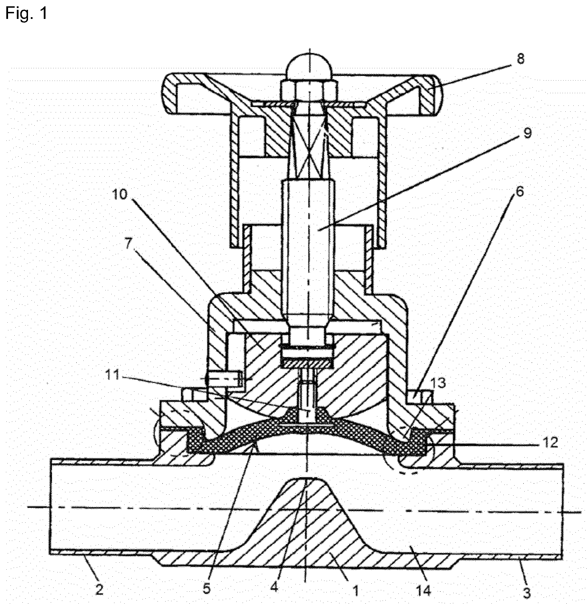

Fig. 1 zeigt ein Membranventil, das ein Gehäuseunterteil 1 umfasst, welches Anschlüsse 2, 3 und ein Wehr 4 aufweist. Das Wehr 4 dient als Sitzfläche für die Membran 5. Die Membran 5 ist mithilfe von Verbindungsmitteln 6 eingespannt, die im Ausführungsbeispiel als Schrauben ausgeführt sind.

Die Membran 5 ist zwischen dem Gehäuseunterteil 1 und einem Gehäuseoberteil 7 eingespannt. Im Gehäuseoberteil 7, das als Haube ausgeführt ist, sind die zur Betätigung der Membran 5 notwendigen Elemente integriert, wie beispielsweise ein Antrieb 8, der im Ausführungsbeispiel als Handrad ausgeführt ist, sowie eine Spindel 9. An der Spindel 9 ist ein Druckstück 10 befestigt.

Das Druckstück 10 ist verschieblich im Gehäuseoberteil 7 angeordnet und wird von einer inneren Wand des Gehäuseoberteils 7 geführt. Durch Betätigung des Antriebs 8 wird über die Spindel 9 eine vertikale Verschiebung des Druckstücks 10 bewirkt, sodass sich die Membran 5 verformt und der Querschnitt zwischen dem Wehr 4 und der Membran 5 vergrößert bzw. verkleinert werden kann. In die Membran 5 ist ein stiftartiges Element 11 eingebettet, das im Ausführungsbeispiel als Membranschraube ausgebildet ist.

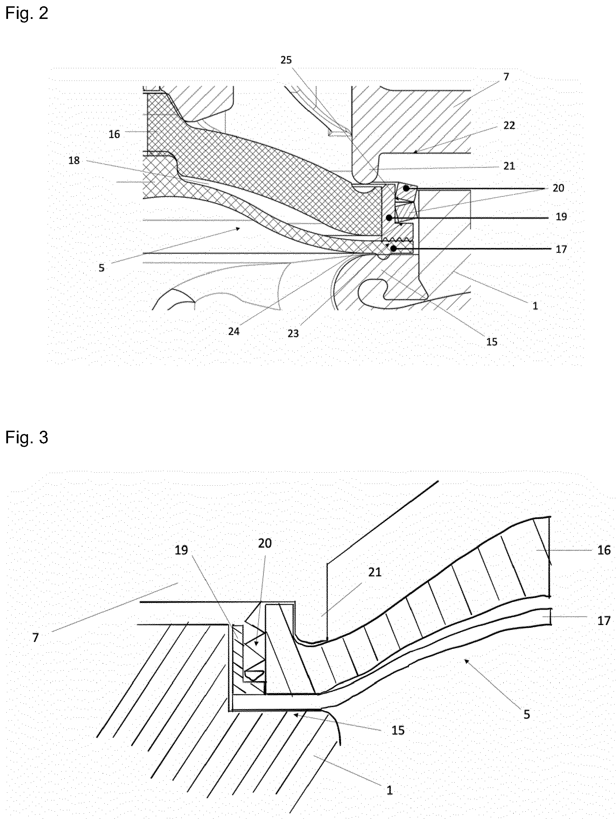

Fig. 2 zeigt eine Detaildarstellung der Membran 5 inklusive der Einspannung zwischen Gehäuseunterteil 1 und Gehäuseoberteil 7. Bei der dargestellten Ausführungsführungsvariante ist das Gehäuseunterteil 1 mit PTFE ausgekleidet und somit für den Einsatz von hochkorrosiven Chemikalien geeignet.

Das Gehäuseunterteil 1 des Membranventils weist eine Auflagefläche 15 zur Einwirkung auf die Membran 5 auf. Auf der Auflagefläche 15 liegt die Membran 5 auf. Die Membran 5 ist zweiteilig ausgebildet und weist eine Komponente 16 mit einer plastischen Dehnung von weniger als 1 % und eine Komponente 17 mit einer plastischen Dehnung von mehr als 10 % auf. Zwischen der Komponente 16 und der Komponente 17 kann ein Hohlraum 18 angeordnet sein. In dieser Ausführungsvariante ist die Komponente 16 aus EPDM und die Komponente 17 aus PTFE ausgebildet.

Das Membranventil weist ein Stützelement 19 auf, das zum dichtenden Anpressen der Membran 5 in der dargestellten Ausführungsvariante mit zwei Federelementen 20 zusammenwirkt. Das Stützelement 19 ist in der dargestellten Ausführungsvariante L-förmig in der Ausführung eines Metallrings ausgebildet. Das Federelement 20 ist als Tellerfeder ausgeführt.

Das Federelement 20 ist nach innen und unten durch das Stützelement 19 begrenzt. Das Federelement 20 ist somit in einem Raum 25 angeordnet, der zumindest teilweise von dem Stützelement 19 begrenzt ist. Von außen bildet das Gehäuseunterteil 1 und von oben das Gehäuseoberteil 7 in der Ausführung als Haube eine Begrenzung für das Federelement 20. Das Federelement 20 wirkt auf eine Fläche 24 des Stützelements 19 pressend ein, um die Komponente 17 der Membran 5 dichtend in Position zu halten und einen sicheren sowie abgedichteten, dauerhaften Betrieb des Membranventils zu gewährleisten.

Das Federelement 20 und das Stützelement 19 wirken unmittelbar mit dem Gehäuseoberteil 7, insbesondere mit der Haube des Membranventils, zur Pressung des Federelements 20 und zur Pressung der Membran 5 zusammen. Dazu weist die Haube eine Nase 21 auf, die die Membran 5 kammert. Gleichzeitig weist die Haube eine Flanschfläche 22 auf, mit der das Stützelement 19 auf die Komponente 17 der Membran 5 gedrückt wird. Dazu weist die Fläche 23 des Stützelements 19 zum dichtenden Anpressen der Komponente 17 der Membran 5 eine Kammprofilierung auf.

In Fig. 3 ist eine weitere Detaildarstellung einer alternativen Ausführungsvariante gezeigt. Die technische Umsetzung der Erfindung entspricht im Wesentlichen der Darstellung in Fig. 2. Der Unterschied zeigt sich in der Ausrichtung des Stützelements 19. Bei dem als Metallring in L-Form ausgeführten Stützelement 19 zeigt eine Öffnung der L-Form in Richtung Mitte des Membranventils, so dass das Federelement 20 zwischen dem Stützelement 19 und der Komponente 16 der Membran 5 angeordnet ist. Das Gehäuseoberteil 7 drückt auf das Federelement 20, das wiederum auf das Stützelement 19 drückt. Dabei drückt das Gehäuseoberteil 7 so auf das Federelement 20, bis es vollständig vorgespannt ist und so, dass eine automatische Nachstellung der Abdichtung zwischen dem Gehäuse des Membranventils und der Membran 5 realisiert werden kann und gewährleistet somit eine dauerhafte Abdichtung an dieser wichtigen Stelle im Membranventil.

## Patentansprüche

1. Membranventil mit einer Membran (5), die Räume voneinander dichtend trennt, wobei die Membran (5) zwischen Gehäuseteilen (1, 7) angeordnet ist,
**dadurch gekennzeichnet,**
**dass** das Membranventil ein Stützelement (19) aufweist, das zum dichtenden Anpressen der Membran (5) mit mindestens einem Federelement (20) zusammenwirkt.

2. Membranventil nach Anspruch 1, **dadurch gekennzeichnet, dass** das Federelement (20) auf eine Fläche des Stützelements (19) pressend einwirkt.

3. Membranventil nach Anspruch 1 oder 2, **dadurch gekennzeichnet, dass** das Federelement (20) in einem Raum (25) angeordnet ist, der zumindest teilweise von dem Stützelement (19) begrenzt ist.

4. Membranventil nach einem der Ansprüche 1 bis 3, **dadurch gekennzeichnet, dass** das Federelement (20) mit einem Gehäuseteil (1, 7) zur Pressung des Federelements (20) zusammenwirkt.

5. Membranventil nach einem der Ansprüche 1 bis 4, **dadurch gekennzeichnet, dass** das Federelement (20) als Tellerfeder ausgebildet ist.

6. Membranventil nach einem der Ansprüche 1 bis 5, **dadurch gekennzeichnet, dass** das Gehäuseteil (1) eine Auflagefläche (15) zur Einwirkung auf die Membran (5) aufweist.

7. Membranventil nach einem der Ansprüche 1 bis 6, **dadurch gekennzeichnet, dass** die Membran (5) mehrteilig mit einer Komponente (16) mit einer plastischen Dehnung von weniger als 1 % und mit einer Komponente (17) mit einer plastischen Dehnung von mehr als 10 %, jeweils bei einer Verpressung um 25 %, Raumtemperatur und 1 Minute Pressdauer, ausgebildet ist.

8. Membranventil nach Anspruch 7, **dadurch gekennzeichnet, dass** die Komponente (16) der Membran (5) mit einer plastischen Dehnung von weniger als 1 % aus einem Elastomer ausgebildet ist.

9. Membranventil nach Anspruch 7 oder 8, **dadurch gekennzeichnet, dass** die Komponente (17) der Membran (5) mit einer plastischen Dehnung von mehr als 10 % aus einem Thermoplast, vorzugsweise einem PTFE, ausgebildet ist.

10. Membranventil nach einem der Ansprüche 1 bis 9, **dadurch gekennzeichnet, dass** die Membran (5) keine Dichtlippe aufweist.
